# EUROPEAN PATENT APPLICATION

(11) **EP 3 576 450 A1**
(43) Date of publication of application: **04.12.2019**
(21) Application number: 17894209.0
(22) Date of filing: 27.10.2017
(51) Int. Cl.: H04W 24/02

(54) **UPLINK DATA TRANSMISSION METHOD, DEVICE AND SYSTEM, AND COMPUTER STORAGE MEDIUM**

(30) Priority: 25.01.2017 CN 201710056523
(71) Applicant: ZTE Corporation, Shenzhen, Guangdong 518057 (CN)
(72) Inventor: MA, Wei, Shenzhen Guangdong 518057 (CN); WANG, Yaying, Shenzhen Guangdong 518057 (CN); DING, Jianfeng, Shenzhen Guangdong 518057 (CN)
(74) Representative: Petit, Maxime
(86) International application number: PCT/CN2017/108119
(87) International publication number: WO 2018/137368

(57) **Abstract**

Provided are an uplink data transmission method, device and system. The uplink data transmission method includes: determining whether a number of times a terminal transmitting uplink transmission data is greater than or equal to a predetermined threshold; and transmitting, in a case where the number is greater than or equal to the predetermined threshold, to a network side apparatus, an establishment request to establish a wireless connection or a resume request to resume the wireless connection. Further provided is a computer storage medium.

## Description

### CROSS-REFERENCE TO RELATED APPLICATIONS

This application is based on and claims priority from Chinese Patent Application No. 201710056523.1 filed on January 25, 2017, the disclosure of which is herein incorporated by reference in its entirety.

### TECHNICAL FIELD

The present disclosure relates to a field of communication, and in particular, to an uplink data transmission method, device, system and a computer storage medium.

### BACKGROUND

The fifth generation (5G) NR technology is a next generation of mobile communication technology standard chosen and formulated by 3GPP. There has put forward applications in three scenes such as Enhanced Mobile Broadband (EMBB), Ultra Reliable Low Latency Communications (URLLC), enhanced Machine-Type Communication (EMTC), and designs and improvements have been made to the physical layer, Media Access Control (MAC) layer, Radio Link Control (RLC) layer and Radio Resource Control (RRC) layer/Packet Data Convergence Protocol (PDCP) layer of cellular mobile communication for demands in different scenes. In the EMTC scene, for data communication of a great amount of terminals in a certain area and technical requirements of low power consumption and low latency of EMTC terminals, 3GPP RAN1 has provided an uplink transmission technology based on grant free uplink transmission GRANT-FREE. In this technology, dedicated resources allocated by system are used, and a network side does not need to allocate dedicated uplink resource for uplink transmission each time data is uploaded. Meanwhile, GRANT-FREE based uplink transmission enables data transmission while the terminal is in an inactive state, therefore, the terminal need neither to be always in a connected state, nor to enter into the connected state from the inactive state through complicated singling for a small amount of data uploading.

With introduction of the GRANT-FREE technology, signaling complexity, latency, and power consumption of uplink data transmission of EMTC terminals are decreased. However, the GRANT-FREE technology based data uploading is a data uploading during a non-connected state, which has problems of high transmission failure rate and low transmission reliability.

### SUMMARY

Embodiments of the present disclosure provide an uplink data transmission method, device and system, in order to improve problems of low success rate and/or low reliability of the GRANT-FREE technology based data transmission in existing art.

According to an embodiment of the present disclosure, there is provided an uplink data transmission method, including: determining whether a number of times a terminal transmitting uplink transmission data is greater than or equal to a predetermined threshold; and transmitting, in a case where the number is greater than or equal to the predetermined threshold, an establishment request to establish a wireless connection or a resume request to resume the wireless connection to a network side apparatus.

According to another embodiment of the present disclosure, there is provided an uplink data transmission device, including: a first determining module configured to determine whether a number of times a terminal transmitting uplink transmission data is greater than or equal to a predetermined threshold; and a first processing module configured to transmit an establishment request to establish a wireless connection or a resume request to resume the wireless connection to the network side apparatus in a case where the number is greater than or equal to the predetermined threshold.

Optionally, the first processing module is further configured to transmit the uplink transmission data to the network side apparatus in a case where the number is less than the predetermined threshold.

Optionally, the device further includes: a second determining module configured to determine whether an acknowledgement corresponding to the uplink transmission data is received from the network side apparatus; and a second processing module configured to initialize the number of times for the uplink transmission data in a case where the acknowledgement is received, and keep determining whether the number of times for the uplink transmission data is greater than the predetermined threshold in a case where the acknowledgement is not received.

Optionally, the device further includes: a first increasing module configured to increase the number of times the terminal transmitting the uplink transmission data as the uplink transmission data is transmitted to the network side apparatus; and a second increasing module configured to increase the number of times the terminal transmitting the uplink transmission data as the acknowledgement corresponding to the uplink transmission data is not received from the network side apparatus.

According to another embodiment of the present disclosure, there is provided an uplink data transmission system including: a terminal configured to determine whether a number of times a terminal transmitting uplink transmission data is greater than or equal to a predetermined threshold, transmit an establishment request to establish a wireless connection or a resume request to resume the wireless connection to a network side apparatus in a case where the number is greater than or equal to the predetermined threshold, and transmit the uplink transmission data to the network side apparatus in a case where the number is less than the predetermined threshold; and a network side apparatus configured to receive the establishment request or the resume request, and establish the wireless connection with the terminal or resume the wireless connection.

According to another embodiment of the present disclosure, there is further provided a storage medium. The storage medium is configured to store computer executable instructions for implementing the uplink data transmission method provided by any one or more of the above technical solutions.

In embodiments of the present disclosure, the number of times a terminal transmitting uplink transmission data is counted, and it is determined according to the number of times whether there is a need to transmit an establishment request to establish a wireless connection or a resume request to resume the wireless connection to the corresponding network side apparatus. Therefore, the problem in the existing art of lacking an effective and reliable terminal data uploading method based on GRANT-FREE technology can be solved, and it is achieved the benefit effect that terminals can upload data effectively and reliably, and the data can be uploaded stably even in cases when a large amount of data needs to be transmitted or where the network condition is poor.

### BRIEF DESCRIPTION OF THE DRAWINGS

The accompanying drawings which incorporated herein provide further understanding of the present disclosure and constitute a part of the specification. The exemplary embodiments of the present disclosure and the description thereof are merely used for explaining the present disclosure, and are not intended to limit the present disclosure inappropriately. In the accompanying drawings:
FIG. 1 is a hardware structure diagram illustrating a mobile terminal implementing an uplink data transmission method according to an embodiment of the present disclosure;
FIG. 2 is a flow chart illustrating an uplink data transmission method according to an embodiment of the present disclosure;
FIG. 3 is a flow chart illustrating an uplink data transmission method corresponding to Scene I according to an embodiment of the present disclosure;
FIG. 4 is a flow chart illustrating an uplink data transmission method corresponding to Scene II according to an embodiment of the present disclosure;
FIG. 5 is a structure diagram illustrating an uplink data transmission device according to an embodiment of the present disclosure;
FIG. 6 is a structure diagram illustrating another uplink data transmission device according to an embodiment of the present disclosure;
FIG. 7a is a structure diagram illustrating another uplink data transmission device according to an embodiment of the present disclosure;
FIG. 7b is a structure diagram illustrating another uplink data transmission device according to an embodiment of the present disclosure;
FIG. 8 is a structure diagram illustrating an uplink data transmission system according to an embodiment of the present disclosure; and
FIG. 9 is a structure diagram illustrating another uplink data transmission system according to an embodiment of the present disclosure.

### DETAILED DESCRIPTION

Hereinafter, the present disclosure will be described in detail with reference to the accompanying drawings and embodiments. It should be noted that embodiments of the application and the features of the embodiments can be combined with each other.

It should be noted that, in the description, claims and the accompanying drawings of the present disclosure, terms "first", "second" etc. are used merely to distinguish between similar subjects, and are not intended to constrain them in a particular sequence or order.

It is discovered that when data is transmitted by using grant free uplink resources such as GRANT-free resources (for example, the grant free uplink resources can be directly used by a terminal device without being allocated or scheduled in advance by a network side apparatus such as a base station, each time it is used, for example, time-frequency resources which can be directly used upon competition), no reliable connection for data is established, and thus a data transmission failure may occur since data is not transmitted over reliable connection, resulting in a problem of low reliability of data transmission. Especially, when lots of terminals are uploading data or where network condition is poor, data may not be uploaded successfully for many times by a terminal. That is, for the GRANT-FREE technology in the existing art, there is a need for an effective and reliable terminal data uploading method. According to this, in embodiments of the present disclosure, a number of times the terminal repeatedly transmitting a same uplink data to-be-uploaded by using the grant free uplink resources (such as the GRANT-FREE resource) is counted first, and a wireless connection should be established between the terminal and network when the number of times reaches a predetermined threshold, wherein the wireless connection can be a newly established wireless connection or a resumed one, thus the terminal could perform data transmission through the wireless connection, and data transmission success rate and data transmission reliability are both increased. Hereinafter, technical solutions of the present disclosure will be further described and explained in conjunction with specific embodiments and accompanying drawings. However, the following embodiments are merely example embodiments, and they do not constitute an improper limitation of the present disclosure.

### Embodiment 1

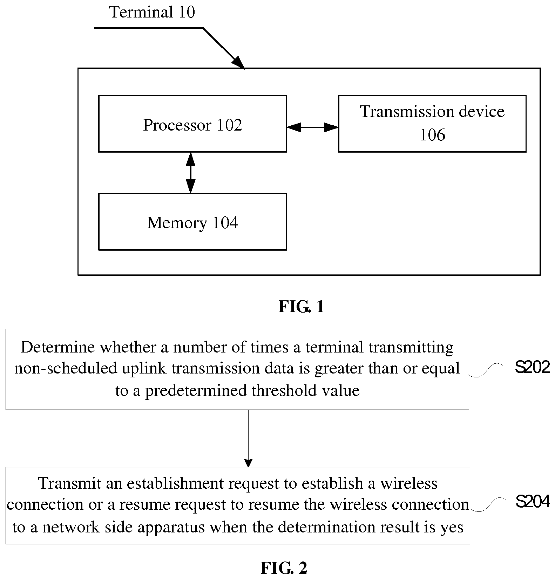

Embodiment 1 of the present application provides a method embodiment which can be implemented in a mobile terminal, computer or any other similar computing device. Taking a case where the method is implemented in a terminal as an example. FIG. 1 is a hardware structure diagram illustrating a mobile terminal implementing an uplink data transmission method, according to an embodiment of the present disclosure. As shown in FIG. 1, the terminal 10 may include one or more (merely one is illustrated in FIG. 1) processors 102 (the processor 102 may include, but not limited to, processing device such as Micro Controller Unit (MCU) or Field Programmable Gate Array (FPGA) etc.), a memory 104 for storing data and a transmission device 106 for communication. Those skilled in the art should understand that the structure shown in FIG. 1 is merely for illustration, but not for limitation of the above electrical device. For example, the terminal 10 may include more or less components than those illustrated in FIG. 1, or has different configuration than that illustrated in FIG. 1.

The memory 104 is configured to store software programs and modules of application software, such as program instructions/modules corresponding to the uplink data transmission method of embodiments of the present disclosure. The above mentioned method is implemented by the processor 102, which performs various functional applications and data processing by executing the software programs and modules stored in the memory 104. The memory 104 may include high-speed random access memory, and may further include non-volatile memory, such as one or more of the magnetic storage device, flash memory or other non-volatile solid state memories. In some examples, the memory 104 may include memories disposed remotely from the processor 102 and connected to the terminal 10 through a network. Examples of the above network include, but not limited to, Internet, Intranet, LAN, mobile communication network, and any combinations thereof.

The transmission device 106 is configured to receive or transmit data through a network, and can correspond to any communication interface such as a network interface, a transceiving antenna, etc. The above mentioned network may include a wireless network provided by a communication provider of the terminal 10. In an example, the transmission device 106 includes a Network Interface Controller (NIC) which can be connected to other network devices to communicate with Internet through a base station. In an example, the transmission device 106 may be a Radio Frequency (RF) module for communicating with Internet wirelessly.

In the present embodiment, there is provided an uplink data transmission method implemented on the above mentioned terminal. FIG. 2 is a flow chart illustrating an uplink data transmission method according to an embodiment of the present disclosure. As shown in FIG. 2, the method includes steps of S202-S204.

At step S202, whether a number of times a terminal transmitting uplink transmission data is greater than or equal to a predetermined threshold is determined.

Optionally, uplink data transmission may be in an idle state, or a connect-inactive state, and the uplink data includes at least non-scheduled uplink transmission data. Herein, the non-scheduled uplink transmission data may be data transmitted by using non-network side scheduled resources (that is, the above grant free resources).

In an application scene, the number of times the terminal transmitting uplink transmission data is the number of times a same uplink data being uploaded. For example, if terminal A is required to transmit data B, in the embodiments of the present disclosure, the number of times terminal A transmitting uplink transmission data B is the number of times the same data being transmitted. In the embodiment, if a terminal uploads a data repeatedly, this may indicate that the data is important and should be uploaded successfully as soon as possible and with secured reliability. Therefore, in the present embodiment, a wireless connection should be established.

In another embodiment, the number of times may be a total number of times different data being uploaded within a preset time period. In this application scene, this may indicate that a terminal has a lot of data to transmit in a short time, thus a wireless connection should be established for securing data uploading success rate and reliability.

It should be noted that the above mentioned predetermined threshold is a threshold determined by configuration of a network side apparatus. The threshold, contained in a system message or a dedicated signaling, is transmitted to the terminal from the network side apparatus.

At step S204, an establishment request to establish a wireless connection or a resume request to resume the wireless connection is transmitted to a network side apparatus when the determination result is yes.

In the present embodiment, the established wireless connection may be used in subsequent data exchange between the terminal and the network side apparatus, for example, used in the terminal uplink data transmission. Data transmission can be performed through the wireless connection by using granted uplink resources, thus terminal data uploading reliability can be secured. The granted uplink resources may be communication resources that can be used by the terminal after resource scheduling and allocation by the network side apparatus. The communication resources may include time-domain resources, frequency-domain resources and resources used for communication, such as various communication codes etc. Typical shared uplink resources may include grant free resources provided through the GRANT-FREE technology.

Optionally, when the determination result is no, uplink transmission data is transmitted to the network side apparatus. In the present embodiment, if the determination result is no, and there is uplink data to be transmitted by the terminal, the uplink data may be transmitted by using the grant free uplink resources. If the determination result is no, and there is no uplink data to be transmitted by the terminal, the number of times the terminal transmits the uplink transmission data is cleared to zero automatically when current timing cycle ends.

Optionally, when the uplink transmission data is transmitted to the network side apparatus, whether an acknowledgement corresponding to the uplink transmission data is received from the network side apparatus is determined. If the determination result is yes, the number of times for the uplink transmission data is initialized; if the determination result is no, whether the number of times for the uplink transmission data is greater than the predetermined threshold is kept determined.

It should be noted that the initializing includes, but not limited to, clearing the number of times for the uplink transmission data to zero. Naturally, adjusting the number of times for the uplink transmission data to a nonzero value, or restoring it to a number of times the uplink transmission data is transmitted for the first time in a time period may also fall into the protection scope of the present embodiment.

Optionally, when the uplink transmission data is transmitted to the network side apparatus, the number of times the terminal transmitting the uplink transmission data is increased.

Optionally, when the acknowledgement corresponding to the uplink transmission data is not received from the network side apparatus, the number of times the terminal transmitting the uplink transmission data is increased.

Optionally, the increasing amount of the number of times the terminal transmitting the uplink transmission data is determined according to circumstances. For example, in a normal network circumstance, the increasing or decreasing amount of the number of times is 1, since the terminal merely transmits the uplink transmission data for one time.

However, in other circumstances, such as where the communication network is abnormal or the terminal has a transmission failure, the uplink transmission data may not be transmitted by the terminal successfully, and the increasing or decreasing amount of the number of times is set to 0 by the terminal by default, so as not to influence the entire process.

Optionally, when the uplink transmission data received by the network side apparatus from the terminal is a scheduled uplink transmission data, the acknowledgement is an acknowledgement transmitted by the network side apparatus after proper decoding.

Optionally, a wireless connection is established with the network side apparatus after an establishment request to establish a wireless connection or a resume request to resume the wireless connection is transmitted to the network side apparatus; and the uplink data is transmitted to the network side apparatus by using Singling Resource Bearer (SRB) and/or Data Resource Bearer (DRB) of the wireless connection.

Optionally, the establishment request includes, but not limited to, at least a radio resource control connection request. The resume request includes, but not limited to, at least a radio resource control connection resume request.

Optionally, the establishment request or the resume request may further carry data that is not transmitted successfully to the network side apparatus in a non-scheduled uplink transmission.

Further, in the present embodiment, following scenes are provided for convenient understanding of the technical solutions described in the present embodiment.

### Scene I :

In this scene, the predetermined threshold is 20, and the number of times for the uplink transmission data increases as the uplink transmission data is transmitted to the network side apparatus. Besides, original number of times for the uplink transmission data is 0.

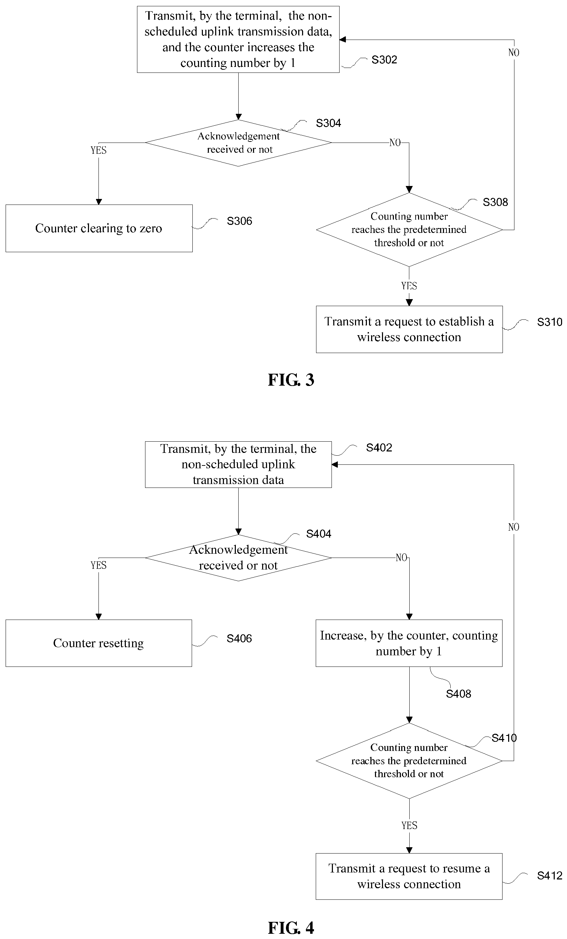

FIG. 3 is a flow chart illustrating an uplink data transmission method corresponding to Scene I according to an embodiment of the present disclosure. As shown in FIG. 3, the method includes steps of S302-S310.

At step S302, when upper applications of a terminal needs to transmit uplink transmission data, the uplink transmission data is transmitted for one time, and the number of times for the uplink transmission data is increased by 1.

At step S304, whether the terminal has received from a network side apparatus an acknowledgement corresponding to the uplink transmission data transmitted is determined.

At step S306, if the terminal has received the acknowledgement, the number of times for the uplink transmission data is reset to 0.

At step S308, if the terminal has not received the acknowledgement, whether the current number of times for the uplink transmission data is greater than or equal to 20 is determined. If less than 20, turn to step S302 to start the loop again.

At step S310, if the number of times for the uplink transmission data is greater than or equal to 20, the terminal transmits a wireless connection establishment request to the network side apparatus. After transmitting the request to the network side apparatus, the terminal transmits the data to the network side apparatus.

After receiving the establishment request, the network side apparatus establishes a wireless connection with the terminal and receives the uplink transmission data transmitted.

### Scene II:

In this scene, the predetermined threshold is 20, and the number of times for the uplink transmission data increases as the uplink transmission data is transmitted to the network side apparatus. Besides, at time t, the original number of times for the uplink transmission data is N (N<20).

FIG. 4 is a flow chart illustrating an uplink data transmission method corresponding to Scene II according to an embodiment of the present disclosure. As shown in FIG. 4, the method includes steps of S402-S412.

At step S402, when upper applications of a terminal needs to transmit uplink transmission data, the uplink transmission data is transmitted for one time.

At step S404, whether the terminal has received from a network side apparatus an acknowledgement corresponding to the uplink transmission data transmitted is determined.

At step S406, if the terminal has received the acknowledgement, the number of times for the uplink transmission data at time t is reset to N.

At step S408, if the terminal has not received the acknowledgement, the number of times for the uplink transmission data is increased by 1.

At step S410, whether the current number of times the uplink transmission data has been transmitted is greater than or equal to 20 is determined. If less than 20, then turn to step S402 and to start the loop again.

At step S412, if the number of times for the uplink transmission data by the terminal is greater than or equal to 20, the terminal transmits a wireless connection resume request to the network side apparatus. After transmitting the request to the network side apparatus, the terminal transmits the data to the network side apparatus.

After receiving the resume request, the network side apparatus resumes wireless connection with the terminal and receives the uplink transmission data transmitted.

It should be noted that any other scenes based on the embodiments of the present disclosure fall into the protection scope of the present disclosure. For example, the method of resuming the wireless connection between the terminal and the network side apparatus in Scene II may also adapted to Scene I . Similarly, the method of establishing a wireless connection between the terminal and the network side apparatus in Scene I may also adapted to Scene II.

Through the above steps, the problem in the existing art of lacking an effective and reliable terminal data uploading method based on GRANT-FREE technology is solved, and it is achieved an benefit effect that terminals can upload data effectively and reliably, and the data can be uploaded stably even in cases when a large amount of data needs to be transmitted or where the network condition is poor.

According to the description of the embodiment, those skilled in the art can clearly understand that the method according to the embodiment can be implemented by using software and necessary common hardware platforms or by using hardware only, but the former is usually adopted in many cases. According to this, an essential part of or a part of technical solutions of the present disclosure that contributes to improvement over existing art can be implemented in form of software products, which are stored in a storage medium (such as a ROM/RAM, Disk, CD) and include several instructions for instructing a terminal device (which may be a phone, computer, server or network apparatus) to perform the methods of the embodiments of the present disclosure.

### Embodiment 2

The present embodiment further provides an uplink data transmission device for implementing the above and exemplary embodiment, those has been described will not be explained again. As used hereinafter, the term "module" means a combination of software and/or hardware that can implement predetermined functions. Although a device of the following embodiment may take a form of software, forms of hardware or a combination of software and hardware should also be contemplated and are possible.

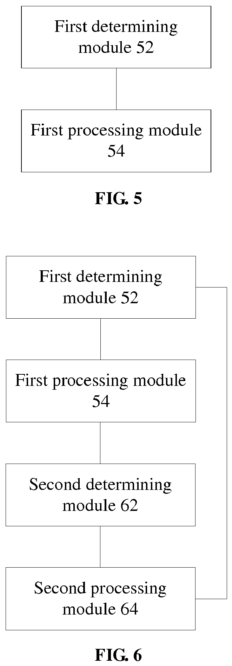

FIG. 5 is a structure diagram illustrating an uplink data transmission device according to an embodiment of the present disclosure. As shown in FIG. 5, the device includes a first determining module 52 and a first processing module 54.

The first determining module 52 is configured to determine whether the number of times for the uplink transmission data transmitted by the terminal is greater than or equal to a predetermined threshold.

The first processing module 54 is connected to the first determining module 52, and is configured to transmit, to a network side apparatus, an establishment request to establish a wireless connection or a resume request to resume the wireless connection, when the determination result is yes.

For example, the first determining module 52 and the first processing module 54 may correspond to a processor. The processor may be an application processor AP, Central Processing Unit (CPU), Digital Signal Processor (DSP) or Field Programmable Gate Array (FPGA) in the terminal.

Optionally, the first processing module 54 is further configured to transmit uplink transmission data to the network side apparatus when the determination result is no.

FIG. 6 is a structure diagram illustrating another uplink data transmission device according to an embodiment of the present disclosure. As shown in FIG. 6, the device further includes a second determining module 62 and a second processing module 64, in addition to the modules shown in FIG. 5.

The second determining module 62 is connected to the first processing module 54, and is configured to determine whether an acknowledgement corresponding to the uplink transmission data is received from the network side apparatus.

The second processing module 64 is connected to the second determining module 62 and the first determining module 52, and is configured to initialize the number of times for the uplink transmission data when the determination result is yes, and keep determining whether the number of times for the uplink transmission data is greater than a predetermined threshold when the determination result is no.

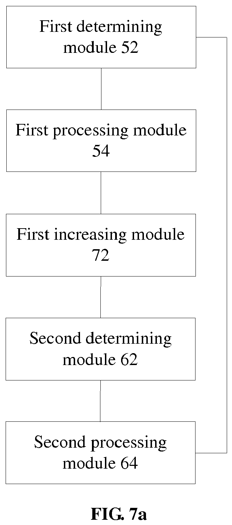

FIG. 7a is a structure diagram illustrating another uplink data transmission device according to an embodiment of the present disclosure. As shown in FIG. 7a, the device further includes a first increasing module 72, in addition to the modules shown in FIG. 6.

The first increasing module 72 is connected to the first processing module 54 and the second determining module 62, and is configured to increase the number of times for uplink transmission data transmitted by the terminal as the uplink transmission data is transmitted to a network side apparatus.

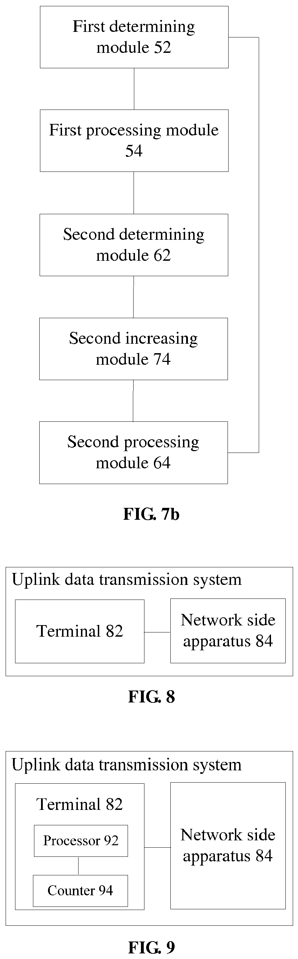

FIG. 7b is a structure diagram illustrating another uplink data transmission device according to an embodiment of the present disclosure. As shown in FIG. 7b, the device further includes a second increasing module 74, in addition to the modules shown in FIG. 6.

The second increasing module 74 is connected to the second processing module 64 and the first determining module 52, and is configured to increase the number of times for uplink transmission data transmitted by the terminal when it is determined that the acknowledgement corresponding to the uplink transmission data is not received from the network side apparatus.

It should be noted that the above modules each can be implemented by software or hardware, in the later case, they may, but not limited to, be implemented in ways of: arranging all of the above modules in the same processor; or, disposing combinations of any of the above modules in different processors.

### Embodiment 3

In the present embodiment, there is provided an uplink data transmission system. FIG. 8 is a structure diagram illustrating an uplink data transmission system according to an embodiment of the present disclosure. As shown in FIG. 8, the system includes a terminal 82 and a network side apparatus 84.

The terminal 82 is configured to determine whether the number of times the terminal 82 transmitting the uplink transmission data is greater than or equal to a predetermined threshold, transmit an establishment request to establish a wireless connection or a resume request to resume the wireless connection to a network side apparatus 84 when the determination result is yes, and transmit the uplink transmission data to the network side apparatus 84 when the determination result is no.

The network side apparatus 84 is configured to receive the establishment request or the resume request, and establish a wireless connection or resume the wireless connection with the terminal 82.

FIG. 9 is a structure diagram illustrating another uplink data transmission system according to an embodiment of the present disclosure. As shown in FIG. 9, in addition to the devices shown in FIG. 8, the terminal 82 of the system further includes a processor 92 and a counter 94.

The processor 92 is configured to determine whether an acknowledgement corresponding to the uplink transmission data is received from the network side apparatus 84, initialize the number of times for the uplink transmission data when the determination result is yes, and instruct the terminal 82 to keep determining whether the number of times the uplink transmission data has been transmitted is greater than the predetermined threshold when the determination result is no.

The counter 94 is configured to increase the number of times the uplink transmission data has been transmitted by the terminal 82, when the uplink transmission data is being transmitted to the network side apparatus 84 or when it is determined that the acknowledgement corresponding to the uplink transmission data is not received from the network side apparatus 84.

It should be noted that the uplink transmission data transmitting in the terminal 82 may be implemented by an interface having data transmitting function, and the acknowledgement receiving operation in the terminal 82 can be implemented by an interface having data receiving function.

### Embodiment 4

The present disclosure further provides a storage medium. Optionally, in the present embodiment, the storage medium may be configured to store computer executable instructions, such as program codes and/or applications etc., for implementing the following steps, and for implementing the above uplink data transmission method provided by one or more technical solutions performed. For example, the following steps S11-S12 may be performed.

At step S11, whether the number of times a terminal transmitting uplink transmission data is greater than or equal to a predetermined threshold is determined.

At step S12, an establishment request to establish a wireless connection or a resume request to resume the wireless connection is transmitted to a network side apparatus, when the determination result is yes.

Optionally, the storage medium is further configured to store program codes for executing the following steps of S2.

At step S2, the uplink transmission data is transmitted to the network side apparatus when the determination result is no.

Optionally, the storage medium is further configured to store program codes for executing the following steps of S31-S33.

At step S31, whether an acknowledgement corresponding to the uplink transmission data is received from the network side apparatus is determined.

At step S32, the number of times for the uplink transmission data is initialized when the determination result is yes.

At step S33, whether the number of times for the uplink transmission data is greater than a predetermined threshold is kept determined when the determination result is no.

Optionally, the storage medium is further configured to store program codes for executing the following steps of S4a-S4b.

At step S4a, the number of times for the uplink transmission data transmitted by the terminal is increased as the uplink transmission data is transmitting to the network side apparatus.

At step S4b, the number of times for the uplink transmission data transmitted by the terminal is increased as it is determined that the acknowledgement corresponding to the uplink transmission data is not received from the network side apparatus.

Optionally, in the present embodiment, the above mentioned storage medium may include, but not limited to, a variety of medium that can store program codes, such as an USB-Stick, Read-Only Memory (ROM), Random Access Memory(RAM), mobile hard drive, magnetic disk, CD, or the like.

Optionally, specific examples of the present embodiment may be referred to those described in the above example embodiments, and they will not be explained again in the present embodiment.

It is obvious to those skilled in the art that the various modules and steps of the present disclosure can be implemented by a common computing device; they can be integrated in a singular computing device or can be distributed on a network composed of a plurality of computing devices. Optionally, they can be implemented by computing device executable program codes; therefore, they may be stored in a storage device and be executed by the computing device. In some cases, the illustrated and described steps may be executed in a sequence different than that disclosed herein, or they may be implemented as a variety of integrated circuit modules, or a plurality of modules or steps among the modules and steps can be implemented in a single integrated circuit module. In this way, the present disclosure is not limited to any specific combination of hardware and software.

The foregoing is merely illustrative of example embodiments of the present disclosure and is not intended to limit the present disclosure. Those skilled in the art will appreciate that many modifications and variations are possible in the present disclosure. Any modifications, equivalent replacements, improvements fall into the principle of the present disclosure are deemed as within the protection scope of the present disclosure.

### Industrial availability

In the embodiments of the present disclosure, when a terminal transmits uplink data using non-scheduled grant free resources, the number of times the terminal transmitting the uplink data is counted; if the number of times reaches a predetermined threshold, the terminal transmits a request to establish a wireless connection to a network side apparatus and transmits the uplink data through the established connection. The connection uses communication resources allocated by the network side apparatus, thus data transmission with poor reliability can become uplink data transmission with high transmission stability, and success rate and reliability of the uplink data transmission are both increased, which has positive industrial advantages. Meanwhile, the technical solution of the embodiments of the present disclosure may be simply implemented by disposing a counter in a terminal, which can be easily carried out and is convenient for wide use in industrial field.

## Claims

1. An uplink data transmission method, comprising:
determining whether a number of times a terminal transmitting uplink transmission data is greater than or equal to a predetermined threshold; and
transmitting, in a case where the number is greater than or equal to the predetermined threshold, an establishment request to establish a wireless connection or a resume request to resume the wireless connection to a network side apparatus.

2. The method of claim 1, further comprising:
transmitting, in a case where the number is less than the predetermined threshold, the uplink transmission data to the network side apparatus.

3. The method of claim 2, wherein after transmitting the uplink transmission data to the network side apparatus, the method further comprises:
determining whether an acknowledgement corresponding to the uplink transmission data is received from the network side apparatus;
initializing, in a case where the acknowledgement is received, the number of times for the uplink transmission data; and
keeping determining, in a case where the acknowledgement is not received, whether the number of times for the uplink transmission data is greater than the predetermined threshold.

4. The method of claim 3, wherein the number of times the terminal transmitting the uplink transmission data increases as the uplink transmission data is transmitted to the network side apparatus.

5. The method of claim 3, wherein the number of times the terminal transmitting the uplink transmission data increases in a case where the acknowledgement corresponding to the uplink transmission data is not received from the network side apparatus.

6. The method of claim 4, wherein when the uplink transmission data transmitted from the terminal and received by the network side apparatus is scheduled uplink transmission data, the acknowledgement is an acknowledgement transmitted by the network side apparatus after proper decoding.

7. The method of claim 1, wherein the predetermined threshold is determined by configuration of the network side apparatus, and is transmitted to the terminal through a system message or a dedicated signaling.

8. The method of claim 1, wherein after transmitting the establishment request to establish the wireless connection or the resume request to resume the wireless connection to the network side apparatus, the method further comprising:
establishing a wireless connection with the network side apparatus; and
transmitting the uplink data to the network side apparatus by using singling resource bearer SRB and/or data resource bearer DRB of the wireless connection.

9. The method of claim 1, wherein the establishment request comprises at least an radio resource control connection request; and
the resume request comprises at least a radio resource control connection resume request.

10. The method of claim 1, wherein the establishment request or the resume request further contains data that is not transmitted to the network side apparatus successfully in a non-scheduled uplink transmission.

11. The method of any one of claims 1 to 10, wherein transmission of the uplink data is in either an idle state or a connect-inactive state.

12. The method of any one of claims 1 to 10, wherein the uplink data comprises at least non-scheduled uplink transmission data.

13. An uplink data transmission device, comprising:
a first determining module configured to determine whether a number of times a terminal transmitting uplink transmission data is greater than or equal to a predetermined threshold; and
a first processing module configured to transmit an establishment request to establish a wireless connection or a resume request to resume the wireless connection to the network side apparatus in a case where the number is greater than or equal to the predetermined threshold.

14. The device of claim 13, wherein the first processing module is further configured to transmit the uplink transmission data to the network side apparatus in a case where the number is less than the predetermined threshold.

15. The device of claim 14, wherein the device further comprises:
a second determining module configured to determine whether an acknowledgement corresponding to the uplink transmission data is received from the network side apparatus; and
a second processing module configured to initialize the number of times for the uplink transmission data in a case where the acknowledgement is received, and keep determining whether the number of times for the uplink transmission data is greater than the predetermined threshold in a case where the acknowledgement is not received.

16. The device of claim 15, wherein the device further comprises:
a first increasing module configured to increase the number of times the terminal transmitting the uplink transmission data as the uplink transmission data is transmitted to the network side apparatus; and
a second increasing module configured to increase the number of times the terminal transmitting the uplink transmission data as the acknowledgement corresponding to the uplink transmission data is not received from the network side apparatus.

17. An uplink data transmission system, comprising:
a terminal configured to determine whether a number of times a terminal transmitting uplink transmission data is greater than or equal to a predetermined threshold, transmit an establishment request to establish a wireless connection or a resume request to resume the wireless connection to a network side apparatus in a case where the number is greater than or equal to the predetermined threshold, and transmit the uplink transmission data to the network side apparatus in a case where the number is less than the predetermined threshold; and
a network side apparatus configured to receive the establishment request or the resume request, and establish the wireless connection with the terminal or resume the wireless connection.

18. The system of claim 17, wherein the terminal further comprises:
a processor configured to determine whether an acknowledgement corresponding to the uplink transmission data is received from the network side apparatus, initialize the number of times for the uplink transmission data in a case where the acknowledgement is received, and instruct the terminal to keep determining whether the number of times for the uplink transmission data is greater than the predetermined threshold in a case where the acknowledgement is not received.

19. The system of claim 18, wherein the terminal further comprises:
a counter configured to increase the number of times the terminal transmitting the uplink transmission data as the uplink transmission data is transmitted to the network side apparatus or in a case where the acknowledgement corresponding to the uplink transmission data is not received from the network side apparatus.

20. A computer storage medium, having stored thereon computer executable instructions for implementing the method of any one of claims 1-12.
